# FASCICULE DE BREVET EUROPEEN

(11) **EP 3 921 189 B1**
(45) Date de publication et mention de la délivrance du brevet: **21.12.2022**
(21) Numéro de dépôt: 20701648.6
(22) Date de dépôt: 30.01.2020
(51) Int. Cl.: B60C 23/04

(54) **SYSTÈME DE MESURE D'AU MOINS UNE CARACTÉRISTIQUE PHYSIQUE POUR UN ENSEMBLE PNEUMATIQUE**
SYSTEM ZUR MESSUNG MINDESTENS EINER PHYSIKALISCHEN EIGENSCHAFT FÜR EINE REIFENANORDNUNG
SYSTEM FOR MEASURING AT LEAST ONE PHYSICAL CHARACTERISTIC FOR A TYRE ASSEMBLY

(30) Priorité: 08.02.2019 FR 1901286
(43) Date de publication de la demande: 15.12.2021
(73) Titulaire: Kemlair, 19000 Tulle (FR)
(72) Inventeur: KEMPF, Christian, 31000 Toulouse (FR)
(74) Mandataire: LLR
(86) Numéro de dépôt international: PCT/EP2020/052301
(87) Numéro de publication internationale: WO 2020/160997

(56) Documents cités:
- EP-A1- 1 447 243
- EP-A1- 2 206 614
- US-A- 5 731 516

## Description

### DOMAINE TECHNIQUE DE L'INVENTION

L'invention concerne un système de mesure d'au moins une caractéristique physique telle que la pression et/ou la température pour un ensemble pneumatique permettant la surveillance de l'état de fonctionnement de l'ensemble pneumatique. Le système de mesure selon l'invention est particulièrement adapté aux ensembles pneumatiques destinés aux véhicules à deux ou trois roues qu'ils soient motorisés ou non.

### ARRIÈRE-PLAN TECHNIQUE DE L'INVENTION

On connaît déjà des dispositifs de surveillance de la pression d'ensembles pneumatiques dans le domaine des véhicules de tourisme qui sont désormais législativement obligatoires dans certaines zones géographiques. Ces dispositifs connus comportent une valve de gonflage montée dans le trou d'une jante et sur laquelle est monté un boîtier plastique enfermant le capteur de pression alimenté par une pile. Le capteur étant à l'intérieur de l'espace fermé formé par la jante et un bandage pneumatique, il est capable de déterminer la pression de l'espace fermé pour la transmettre au réseau de bord du véhicule. Un tel dispositif est décrit par exemple dans le document EP 1 447 243 A1. Les documents US 5 731 516 A et EP 2 206 614 A1, quant à eux, décrivent des dispositifs avec boîtier métallique.

Ces dispositifs ne sont pas encore obligatoires pour les cycles motorisés, c'est-à-dire les véhicules à deux ou trois roues comme les motocyclettes, les cyclomoteurs ou les motocycles à trois roues (parfois appelés « trike »). De fait, les dispositifs de surveillance de la pression d'ensembles pneumatiques pour ces véhicules à deux ou trois roues connus actuellement sont en fait des dispositifs de surveillance de la pression pour des ensembles pneumatiques pour véhicule de tourisme adaptés pour être montés aux plus faibles dimensions de jantes véhicules à deux ou trois roues.

Ces adaptations aux faibles dimensions de jantes peuvent ne pas être possibles en raison de la taille trop grande des boîtiers plastiques des dispositifs de surveillance utilisé pour les véhicules de tourisme ce qui rend la surveillance de pression impossible pour les jantes dont les dimensions sont trop petites.

### RÉSUME DE L'INVENTION

L'invention a notamment pour but de fournir un nouveau type de système de mesure d'au moins une caractéristique physique telle que la pression et/ou la température pour un ensemble pneumatique dont la compacité autorise son adaptation même sur les ensembles pneumatiques avec des jantes de très faibles dimensions et dont la simplicité permet de réduire les coûts de fabrication tout en maintenant des performances équivalentes aux dispositifs actuels de surveillance de la pression d'ensembles pneumatiques de véhicules de tourisme.

À cet effet l'invention a pour objet un système de mesure d'au moins une caractéristique physique pour un ensemble pneumatique comportant un dispositif de détection de la caractéristique physique, un dispositif de transmission sans fil de valeurs représentatives des mesures obtenues par le dispositif de détection, un dispositif de passage antiretour de fluide permettant le gonflage de l'ensemble pneumatique et une source d'énergie électrique, **caractérisé en ce que** le système de mesure comporte un corps métallique électriquement conducteur fermé par un couvercle en matériau transparent aux ondes du dispositif de transmission sans fil permettant au corps d'être utilisé comme réceptacle permettant le positionnement stable, la transmission d'énergie électrique et la protection mécanique des dispositifs du système de mesure tout en permettant la transmission sans fil au travers du couvercle de valeurs représentatives des mesures obtenues par le dispositif de détection.

De manière inattendue, il a été trouvé qu'un matériau métallique peut être utilisé pour le corps alors qu'un préjugé du domaine tend à ne pas utiliser de partie métallique afin de ne pas perturber le fonctionnement du dispositif de transmission sans fil. Avantageusement selon l'invention, les valeurs représentatives des mesures obtenues par le dispositif de détection peuvent être transmises, de manière étonnante, par ondes électromagnétiques au travers du couvercle sans atténuation notable par rapport aux dispositifs actuels de surveillance de la pression d'ensembles pneumatiques de véhicules de tourisme malgré la proximité du corps métallique.

On comprend également que le corps métallique, qui possède une grande rigidité, est, avantageusement selon l'invention, utilisé comme une enveloppe de protection pour les organes du système de mesure. En effet, notamment lors des phases de montage et de démontage d'un bandage pneumatique, ce dernier peut entrer en contact avec le système de mesure en exerçant une contrainte plus ou moins forte. Le corps métallique permet donc une très grande résistance à la déformation notamment par cisaillement d'autant plus élevée que le corps est très compact en ne dépassant pas ou peu de la gorge (parfois appelée « well ») de la jante.

Enfin, le corps est préférentiellement utilisé comme élément de transmission d'énergie électrique entre la source d'énergie électrique et les dispositifs du système de mesure. On comprend donc qu'une partie des connexions électriques peut ainsi être réalisée par le corps lui-même. Le système de mesure comprend ainsi moins de composants et est, par conséquent, plus compact et plus économique à fabriquer.

Le système de mesure peut également comporter l'une ou plusieurs des caractéristiques optionnelles suivantes, prises seules ou en combinaison.

Le dispositif de détection peut comporter au moins un capteur alimenté par la source d'énergie électrique permettant de mesurer la caractéristique physique, la caractéristique physique mesurée pouvant être une pression et/ou une température de l'espace interne de l'ensemble pneumatique.

Le corps peut comporter un fond avec un évidement afin de compenser les dilatations de la source d'énergie électrique. En effet, suivant les conditions de roulage du véhicule sur lequel est monté le système de mesure, ce dernier peut être soumis à une élévation de température pouvant entraîner la dilatation notamment de la source d'énergie. Préférentiellement, l'évidement forme un interstice au moins égal à 0,1 mm entre la source d'énergie électrique et le corps.

Le dispositif de transmission sans fil peut comporter un générateur d'ondes électromagnétiques alimenté par la source d'énergie électrique. Le dispositif de transmission sans fil peut également comporter au moins une antenne apte à émettre, au travers du couvercle, les ondes électromagnétiques générées en dehors du système de mesure.

Préférentiellement selon l'invention, au moins une partie de l'antenne est entourée par le corps et au moins une autre partie est entourée par le couvercle. Ainsi, les dimensionnements et les positionnements du corps et de l'antenne notamment l'un par rapport à l'autre, c'est-à-dire notamment la pénétration de l'antenne dans le corps, permettent d'optimiser la qualité de l'émission du dispositif de transmission sans fil. La partie de l'antenne entourée par le corps s'étend ainsi, de manière préférée, sur une hauteur inférieure ou égale à 7 mm. L'antenne peut être montée autour de l'électronique du système de mesure afin d'offrir une hauteur maximale de l'antenne la plus élevée possible, c'est-à-dire que la partie de l'antenne entourée par le couvercle peut s'étendre à proximité du couvercle, voire être déposée contre une face du couvercle ou même être noyée dans le couvercle, c'est-à-dire inaccessible sans briser le couvercle.

Le couvercle peut comporter en outre au moins un pilier destiné à plaquer la source d'énergie électrique contre le corps afin de mieux maintenir les éléments du système de mesure entre eux.

L'invention a également pour objet un ensemble pneumatique comportant un bandage pneumatique ajusté sur une jante et un système de mesure de pression monté sur la jante afin de surveiller au moins une caractéristique physique de l'ensemble pneumatique, **caractérisé en ce que** le système de mesure est tel que présenté plus haut.

L'ensemble pneumatique peut également comporter l'une ou plusieurs des caractéristiques optionnelles suivantes, prises seules ou en combinaison.

Le système de mesure peut comporter en outre un dispositif de fixation du corps dans un évidement de la jante afin de rendre solidaire l'ensemble pneumatique et le système de mesure de l'invention.

Selon un premier mode de réalisation, le dispositif de fixation est monobloc avec le corps et en prolongement du corps afin de saillir de la jante pour permettre la solidarisation du système de mesure sur la jante tout en autorisant le gonflage de l'ensemble pneumatique par le système de mesure.

Selon un premier mode de réalisation, la jante est solidarisée entre le corps et le dispositif de fixation tout en autorisant le gonflage de l'ensemble pneumatique par le système de mesure. Cette implantation est privilégiée quand la géométrie de la jante impose un coude, c'est-à-dire empêche la sortie droite, au dispositif de passage antiretour de fluide permettant le gonflage de l'ensemble pneumatique.

### BRÈVE DESCRIPTION DES DESSINS

D'autres particularités et avantages de l'invention ressortiront clairement de la description qui en est faite ci-après, à titre indicatif et nullement limitatif, en référence aux dessins annexés, dans lesquels :
- La figure 1 est une vue schématique en écorché d'un système de mesure selon un premier mode de réalisation de l'invention sur une jante d'ensemble pneumatique ;
- La figure 2 est une vue schématique en écorché d'un système de mesure selon un deuxième mode de réalisation de l'invention sur une jante d'ensemble pneumatique.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionné d'un indice. La description de leur structure et de leur fonction n'est donc pas systématiquement reprise.

Par « ensemble 21 pneumatique », on entend tous types de roue entière formée d'une jante 23 montée sur un véhicule et fermée par un bandage pneumatique (non représenté) en formant un espace interne 22 qui est gonflé par un gaz sous pression comme de l'air ou de l'azote.

Par « bandage pneumatique », on entend tous les types de bandages élastiques soumis à une pression interne.

L'invention s'applique à tous types d'ensembles 21 pneumatiques, notamment ceux destinés à équiper des véhicules à moteur de type tourisme, SUV (abréviation venant des termes anglais « Sport Utility Vehicles »), deux roues (notamment motos), avions, véhicules industriels choisis parmi camionnettes, « Poids-lourds » - c'est-à-dire métro, bus, engins de transport routier (camions, tracteurs, remorques), véhicules hors-la-route tels qu'engins agricoles ou de génie civil -, ou autres véhicules de transport ou de manutention. L'invention s'applique également aux véhicules non motorisés comme notamment une remorque, une semi-remorque ou une caravane.

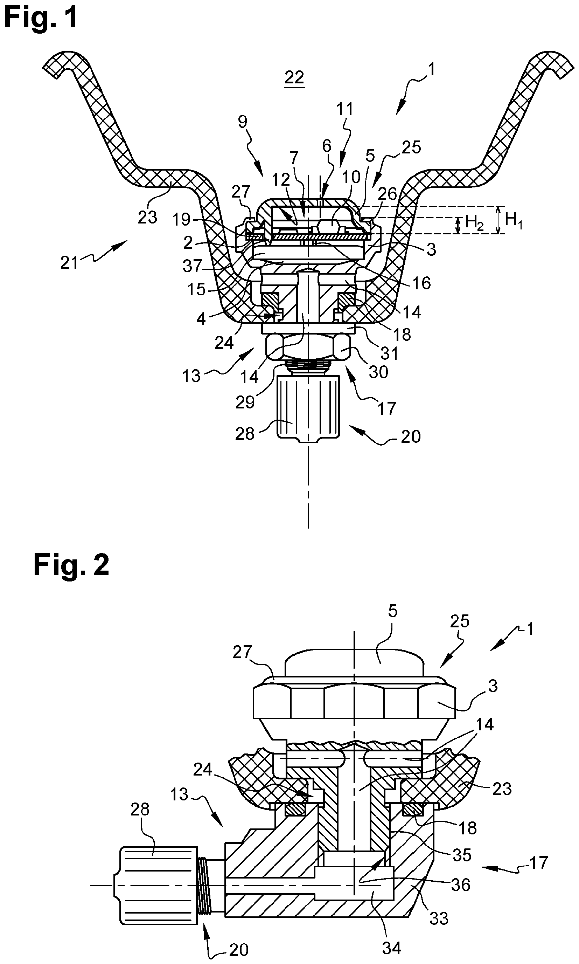

L'invention a notamment pour but de fournir un nouveau type de système 1 de mesure d'au moins une caractéristique physique telle que la pression et/ou la température pour un ensemble pneumatique. Comme illustré aux figures 1 et 2, le système 1 de mesure comporte principalement un corps 3 fermé par un couvercle 5. Selon l'invention, le corps 3 est formé en un matériau métallique ce qui le rend notamment très robuste et peu déformable. Dans les exemples illustrés aux figures 1 et 2, on peut voir que le corps 3 forme une pièce de révolution permettant un coût de fabrication très bas. Le corps 3 comporte un évidement 7 dans lequel les organes du système 1 de mesure sont reçus et qui est fermé par le couvercle 5. Le corps 3 métallique peut être, par exemple, formé à base d'acier ou d'aluminium. De manière préférée, le corps 3 est en aluminium recouvert par une couche de protection afin d'éviter toute corrosion des surfaces en contact avec les éléments électriquement conducteurs tels qu'une source 15 d'énergie électrique ou un substrat 19. La couche de protection peut être obtenue, par exemple, par un traitement chimique tel qu'un nickelage.

On comprend donc que le corps 3 métallique, avantageusement selon l'invention, sert de réceptacle et est utilisé pour garantir le bon positionnement de manière bloquée et la protection des organes du système 1 de mesure. En effet, notamment lors des phases de montage et de démontage d'un bandage pneumatique, ce dernier peut entrer en contact avec le système 1 de mesure en exerçant une contrainte plus ou moins forte. Le corps 3 métallique permet donc une très grande résistance à la déformation notamment par cisaillement d'autant plus élevée que le corps 3 est très compact en ne dépassant pas ou peu de la gorge (parfois appelée « well ») de la jante ce qui permet de garder le positionnement stable des organes entre eux dans le système.

Le système 1 de mesure comporte principalement un dispositif 9 de détection, un dispositif 11 de transmission sans fil, un dispositif 13 de passage antiretour de fluide, une source 15 d'énergie électrique et un dispositif 17 de fixation.

Le dispositif 9 de détection peut comporter au moins un capteur 10 alimenté par la source 15 d'énergie électrique permettant de mesurer la caractéristique physique. Typiquement, le dispositif 9 de détection peut comporter un substrat 19 tel qu'une plaquette en résine de polymère ou en matériau semi-conducteur sur lequel est formé ou rapporté au moins un circuit intégré formant le capteur 10 comme, par exemple, de pression et/ou la température. Un tel substrat 19 est en général protégé par un produit d'étanchéité, comme par exemple du type silicone, qui le recouvre. Enfin, le capteur 10 communique avec l'espace interne 22 de l'ensemble 21 pneumatique par une ouverture 6 dans le couvercle 5.

Le dispositif 11 de transmission sans fil peut comporter un générateur d'ondes électromagnétiques (non représenté) alimenté par la source 15 d'énergie électrique. Le dispositif de transmission sans fil peut également comporter au moins une antenne 12 apte à émettre les ondes électromagnétiques générées en dehors du système 1 de mesure. Préférentiellement, les ondes électromagnétiques sont au moins utilisées pour transmettre des valeurs représentatives des mesures obtenues par le dispositif 9 de détection. Typiquement, le dispositif 11 de transmission sans fil peut également utiliser le substrat 19 tel que décrit plus haut sur lequel est formé ou rapporté au moins un circuit intégré formant le générateur (non représenté) d'ondes électromagnétiques comme, par exemple, des ondes radio.

C'est pourquoi, afin de permettre la transmission sans fil au travers du couvercle 5, ce dernier est, selon l'invention, en matériau transparent aux ondes électromagnétiques du dispositif 11 de transmission sans fil comme par exemple une résine polymère ou un matériau polymère. De plus, l'implantation de l'antenne 12 au niveau du couvercle 5 permet une émission des ondes électromagnétiques la plus éloigné possible du corps métallique afin que ce dernier ne perturbe pas ou peu la transmission sans fil du système 1 de mesure.

En effet, de manière inattendue, il a été trouvé qu'un matériau métallique peut être utilisé pour le corps 3 alors qu'un préjugé technique du domaine tend à ne pas utiliser de partie métallique afin de ne pas perturber le fonctionnement du dispositif 11 de transmission sans fil. Avantageusement selon l'invention, les valeurs représentatives des mesures obtenues par le dispositif 9 de détection peuvent être transmises, de manière étonnante, par ondes électromagnétiques au travers du couvercle 5 sans atténuation notable par rapport aux dispositifs actuels de surveillance de la pression d'ensembles pneumatiques de véhicules de tourisme malgré la proximité du corps 3 métallique.

Comme visible à cette figure 1, le couvercle 5 est sensiblement en forme de bol, c'est-à-dire forme une concavité s'ajoutant au volume de l'évidement 7 du corps 3 afin de pouvoir éloigner encore d'avantage l'antenne 12 du corps 3 et de plus facilement implanter les dispositifs 9 et 11. De plus, dans un mode de réalisation préféré, dans la concavité de la forme en bol, au moins un pilier 37 (un seul visible à la figure 1) et préférentiellement trois piliers 37, se projettent, c'est-à-dire sont en saillie, du fond de la concavité de la forme en bol afin de plaquer la source 15 d'énergie électrique contre le corps 3 en passant au travers ou à côté du substrat 19.

Préférentiellement selon l'invention, au moins une partie de l'antenne 12 est entourée par le corps 3 et au moins une autre partie est entourée par le couvercle 5. Ainsi, les dimensionnements et les positionnements du corps 3 et de l'antenne 12 notamment l'un par rapport à l'autre, c'est-à-dire notamment la pénétration de l'antenne 12 dans le corps 3, permettent d'optimiser la qualité de l'émission du dispositif 11 de transmission sans fil.

Comme illustré à la figure 1, l'antenne 12 est montée, de manière préférée, autour des dispositifs 9 et 11 (c'est-à-dire autour de l'électronique) du système 1 de mesure afin d'offrir une largeur et une hauteur H₁ de l'antenne12 les plus élevées possibles, c'est-à-dire une aire interne d'antenne 12 la plus élevée possible. Ainsi, l'antenne 12, par exemple du type boucle, peut être connectée à deux extrémités opposées d'une face du substrat 19 et la partie de l'antenne 12 entourée par le couvercle 5 peut s'étendre à proximité du couvercle 5 voire être en contact avec le couvercle 5. En effet, l'antenne 12, selon une variante expliquée ci-après, peut, par exemple, être déposée contre une face du couvercle 5 ou même être noyée dans le couvercle 5, c'est-à-dire inaccessible sans briser le couvercle 5.

La partie de l'antenne entourée par le corps 3 s'étend ainsi, de manière préférée, sur une hauteur H₂ inférieure ou égale à 7 mm par rapport au plan du substrat 19 sur laquelle est connectée électriquement l'antenne 12 afin d'offrir une aire interne d'antenne 12 suffisamment élevée tout en gardant un corps 3 très compact pour ne dépasser pas ou peu de la gorge (parfois appelée « well ») de la jante. De manière encore plus préférée, il a été trouvé qu'une hauteur H₂ s'élevant à 3 mm au maximum pour une hauteur H₁ de 5 mm au minimum permettait, de manière inattendue, une transmission sans atténuation notable par rapport aux dispositifs actuels de surveillance de la pression d'ensembles pneumatiques de véhicules de tourisme malgré la proximité du corps 3 métallique.

L'antenne 12 est, selon une variante préférée, montée contre une face du couvercle 5. Plus précisément, dans l'exemple illustrée à la figure 1, l'antenne 12 est montée contre la face interne du couvercle 5 faisant face à l'évidement 7 du corps 3. L'antenne 12 est préférentiellement déposée contre le couvercle 5, par exemple, par sérigraphie selon un motif prédéterminé de faible épaisseur. Le motif peut ainsi former une boucle, par exemple annulaire ou polygonale, ou une spirale ou un dessin en chicanes.

Bien entendu, selon une autre variante, l'antenne 12 pourrait être sur une autre face du couvercle 5 comme, par exemple, contre la face externe du couvercle 5 faisant face à l'espace 22 interne de l'ensemble 21 pneumatique ou encore noyée dans le couvercle 5, c'est-à-dire inaccessible sans briser le couvercle 5.

Le couvercle 5 et le corps 3 comporte au moins un dispositif 25 d'attache permettant de les rendre solidaires. Le dispositif 25 d'attache pourrait ainsi être par exemple du type à vissage, à emmanchement, à sertissage, à baïonnette ou à emboîtage élastique. Dans l'exemple illustré à la figure 1, l'épaulement 26 du couvercle 5 est serti par plaquage obtenu par la déformation d'au moins une lèvre 27 périphérique du corps 3. Il a été montré de manière étonnante que la géométrie sertie de cette lèvre 27 périphérique en matériau métallique ne détériore pas le bon fonctionnement du dispositif 11 de transmission sans fil. Comme cela sera mieux expliqué ci-après, le dispositif 25 d'attache finit l'assemblage du système 1 de mesure en autorisant une adaptation géométrique aux dispersions de pré-montage du système 1 de mesure notamment grâce à la déformation, de manière préférée, de chaque pilier 37 du couvercle 5 contre la source 15 d'énergie électrique.

De plus, avantageusement selon l'invention, le dispositif 25 d'attache peut également permettre, dans la variante préférée d'antenne 12 visible à la figure 1, de plaquer le bord périphérique du couvercle 5 comportant l'épaulement 26 contre le substrat 19 afin de garantir la connexion électrique de l'antenne 12 au reste du dispositif 11 de transmission sans fil présent sur le substrat 19 sans avoir besoin de contacts électriques supplémentaires tels que des lames ou des fils.

Du côté opposé du substrat 19, ce dernier est connecté à une des bornes de la source 15 d'énergie électrique par un élément 16 de compensation géométrique. L'autre borne de la source 15 d'énergie électrique est préférentiellement connectée par contact du substrat 19 avec l'épaulement 2 de l'évidement 7 du corps 3 afin d'alimenter en énergie les dispositifs 9 et 11. L'élément 16 de compensation géométrique peut, à titre d'exemple, être un plot de mousse en polymère chargé de fils électriquement conducteurs ou un matériau élastomère chargé de particules électriquement conductrices. On comprend que, préférentiellement selon l'invention, une partie des connexions électriques est réalisée par le corps 3 lui-même. Le système 1 de mesure comprend ainsi moins de composants et est, par conséquent, plus compact et plus économique à fabriquer.

Plus précisément, le corps 3 peut ainsi être électriquement conducteur et utilisé comme élément de transmission d'énergie électrique entre la source 15 d'énergie électrique et les dispositifs 9, 11 du système de mesure via le substrat 19 et/ou l'élément de compensation 16 tout en permettant la transmission sans fil de valeurs représentatives des mesures obtenues par le dispositif 9 de détection. Bien entendu, au moins un élément électriquement conducteur (piste, fil, lame, etc.) pourrait, alternativement au corps 3 électriquement conducteur, être utilisé comme élément de transmission d'énergie électrique entre la source 15 d'énergie électrique et les dispositifs 9, 11 du système 1 de mesure via le substrat 19 et/ou l'élément de compensation 16.

Selon un premier mode de réalisation illustré à la figure 1, le dispositif 13 de passage antiretour de fluide est située dans la partie basse du corps 3. Le dispositif 13 comporte essentiellement au moins un canal 14 et un clapet 20 antiretour permettant le gonflage de l'ensemble 21 pneumatique et empêchant son dégonflage. Le clapet 20 étant d'un type classique pour une valve d'ensemble 21 pneumatique de véhicule, il ne sera pas d'avantage décrit ci-dessous. Dans l'exemple de la figure 1, le clapet 20 antiretour est coiffé d'un bouchon 28 de protection.

Selon le premier mode de réalisation illustré à la figure 1, le dispositif 17 de fixation permet d'attacher le corps 3 dans un évidement 24 de la jante 23 afin de rendre solidaire l'ensemble 21 pneumatique et le système 1 de mesure de l'invention. Comme visible à la figure 1, le dispositif 17 de fixation peut comporter au moins un élément 18 d'étanchéité (situé entre le corps 3 et la jante 23 dans l'exemple de la figure 1) destiné à garantir le maintien de la pression de l'espace 22 interne de l'ensemble 21 pneumatique.

Le dispositif 17 de fixation dans le premier mode de réalisation est monobloc avec le corps 3, en prolongement du corps 3 et coaxialement à une partie du canal 14 afin de saillir de la jante 23. Il est donc possible de solidariser le système 1 de mesure sur la jante 23 tout en autorisant le gonflage de l'ensemble 21 pneumatique par le système 1 de mesure par le canal 14. Dans l'exemple de la figure 1, le dispositif 17 de fixation comporte un filet 29 sur la surface externe du corps 3 et un ensemble écrou 30 - rondelle 31 afin de permettre la solidarisation contre la jante 23 du corps 3 à l'aide de l'ensemble écrou 30 - rondelle 31 par vissage.

Un deuxième mode de réalisation illustré à la figure 2 est prévu, par exemple, dans le cas où il n'est pas souhaité que le dispositif 13 de passage antiretour de fluide soit en prolongement rectiligne du corps 3 du système 1 de mesure. Cette implantation peut être imposée, par exemple, quand la géométrie de la jante 23 impose un coude, c'est-à-dire empêche la sortie droite, au dispositif 13 de passage antiretour de fluide permettant le gonflage de l'ensemble pneumatique.

Comme illustré à la figure 2, le deuxième mode de réalisation comporte un deuxième corps 33 rapporté sur un corps 3 similaire au premier mode de réalisation mais tronqué d'une partie de sa zone basse. Il est d'ailleurs mieux visible à la figure 2 que le corps 3 peut comporter au moins une forme (des méplats en dessous de la lèvre 27 à la manière de la surface extérieure d'un écrou dans le cas de la figure 2) destinée à améliorer sa préhension. Le dispositif 13 de passage antiretour de fluide est située dans le deuxième corps 33. Le dispositif 13 comporte essentiellement au moins un deuxième canal 34 et un clapet 20 antiretour permettant le gonflage de l'ensemble 21 pneumatique et empêchant son dégonflage. Dans l'exemple de la figure 2, le clapet 20 antiretour est coiffé d'un bouchon 28 de protection.

Selon le deuxième mode de réalisation illustré à la figure 2, le dispositif 17 de fixation permet d'attacher le corps 3 dans un évidement 24 de la jante 23 afin de rendre solidaire l'ensemble 21 pneumatique et le système 1 de mesure de l'invention. Comme visible à la figure 2, le dispositif 17 de fixation peut comporter au moins un élément 18 d'étanchéité (situé entre le deuxième corps 33 et la jante 23 dans l'exemple de la figure 2) destiné à garantir le maintien de la pression de l'espace 22 interne de l'ensemble 21 pneumatique.

Selon le deuxième mode de réalisation, la jante 23 est solidarisée entre le corps 3 et le deuxième corps 33 à l'aide du dispositif 17 de fixation tout en autorisant le gonflage de l'ensemble 21 pneumatique par le système 1 de mesure par les canaux 34 et 14. Dans l'exemple de la figure 2, le dispositif 17 de fixation comporte un filet 35 sur la surface externe du corps 3 et un taraudage 36 dans le deuxième corps 33 afin de permettre le vissage des corps 3, et 33 en sandwich contre la jante 23.

On comprend que le deuxième corps 33 peut posséder une géométrie ainsi parfaitement adaptée à l'implantation souhaitée pour le gonflage optimal de l'ensemble 21 pneumatique comme, par exemple, en raison d'une géométrie de jante ne permettant de mettre en œuvre le premier mode de réalisation de l'invention. On comprend toutefois que le corps 33 peut ne pas être coudé ou généralement oblique par rapport au corps 3 comme dans la figure 2 mais être en prolongement rectiligne du corps 3 à la manière du premier mode de réalisation comme dans l'exemple illustré à la figure 1 mais sans être monobloc.

Quel que soit le mode de réalisation, la source 15 d'énergie électrique est montée contre le fond 4 de l'évidement 7 du corps 3 afin que l'une des bornes (borne positive d'une pile bouton dans les exemples des figures 1 et 2) soit préférentiellement en contact direct avec le corps 3 en matériau métallique électriquement conducteur. Préférentiellement, un évidement (représenté à la figure 1) est présent, préférentiellement, dans la partie centrale du fond 4 de l'évidement 7 du corps 3 afin de compenser les éventuelles dilatations de la source 15 d'énergie électrique. Comme visible à la figure 1, même avec l'évidement dans le fond 4, ce dernier est toujours séparé du canal 14 par une paroi du corps 3. En effet, suivant les conditions de roulage du véhicule sur lequel est monté le système 1 de mesure, ce dernier peut être soumis à une élévation de température pouvant entraîner la dilatation notamment de la source 15 d'énergie. L'évidement du fond 4 forme un interstice au moins égal à 0,1 mm et, préférentiellement au moins égal à 0,2 mm et idéalement 0,5 mm, entre le centre de la borne de la source 15 d'énergie électrique (positive à la figure 1) et le corps 3 afin de permettre à la source 15 d'énergie électrique de se dilater librement sous l'effet d'une augmentation de température. Avantageusement, cela évite que cette dilatation déforme le substrat 19, via l'élément de compensation 16, ce qui fragiliserait l'électronique du système 1 de mesure. En outre, préférentiellement, cela évite que cette dilatation répétée ne déforme au fur et à mesure le(s) pilier(s) 37 du couvercle 5 au point de perdre leur fonction de maintien et de blocage de la source 15 d'énergie électrique au fond 4 du corps 3.

Les dispositifs 9, 11, 13 sont ensuite montés. Dans l'exemple des figures 1 et 2, le substrat 19 est monté dans le corps 3 et le dispositif 13 de passage antiretour de fluide respectivement dans le corps 3 et le deuxième corps 33. On comprend alors que l'élément 16 de compensation entre en contact avec l'autre borne (borne négative d'une pile bouton dans les exemples des figures 1 et 2) de la source 15 d'énergie électrique sans que le substrat 19 ne repose encore contre l'épaulement 2 de l'évidement 7 du corps 3.

Le couvercle 5 est ensuite monté sur le corps 3 à l'aide du dispositif 25 d'attache en passant, préférentiellement, chaque pilier 37 dans un trou ou à côté du substrat 19, afin de coiffer l'évidement 7 du corps 3 comportant les dispositifs 9, 11 et la source 15 d'énergie électrique. Dans les exemples illustrés aux figures 1 et 2, l'épaulement 26 du couvercle 5 est serti par plaquage obtenu par la déformation d'au moins une lèvre 27 périphérique du corps 3. Le dispositif 25 d'attache finit donc l'assemblage du système 1 de mesure en autorisant une adaptation géométrique aux dispersions de pré-montage de chaque élément du système 1 de mesure.

En outre, de manière préférée, chaque extrémité libre de pilier 37 comporte une portion déformable plastiquement et/ou élastiquement permettant également d'adapter la contrainte de placage de la source 15 d'énergie électrique contre le corps 3 aux dispersions de pré-montage de chaque élément du système 1 de mesure. Enfin, préférentiellement selon l'invention, le dispositif 25 d'attache permet de plaquer le bord périphérique du couvercle 5 contre le substrat 19, de plaquer le bord périphérique du substrat 19 contre l'épaulement 2 et de déformer l'élément 16 de compensation afin de garantir toutes les connexions électriques du système 1 de mesure comme celle de l'antenne 12 et celle de la source 15 d'énergie électrique sans avoir besoin de contacts électriques supplémentaires tels que des lames ou des fils. On comprend ainsi que, après le montage du couvercle 5 sur le corps 3 à l'aide du dispositif 25 d'attache, tous les éléments du système 1 de mesure sont maintenus ensemble en position de manière simple et robuste.

L'invention n'est pas limitée aux modes de réalisation et variantes présentés et d'autres modes de réalisation et variantes apparaîtront clairement à l'homme du métier. Il est notamment possible d'envisager que le corps 3 soit en deux parties afin de prémonter le couvercle 5 sur une partie supérieure du corps 3 et d'assembler a *posteriori* la partie inférieure du corps 3 déjà muni de la source 15 d'énergie électrique et du substrat 19 voire de l'antenne 12 (par exemple par vissage, par fixation à baïonnette ou par emboîtage élastique). De plus, les dimensions et/ou forme des différents éléments du système 1 de mesure peuvent être modifiés suivant les applications envisagées comme par exemple un autre type de mesure de caractéristique physique que la pression ou la température et/ou un autre type d'implantation dans un ensemble 21 pneumatique et/ou un autre type d'ensemble 21 pneumatique comme un réservoir de gaz.

## Revendications

1. Système (1) de mesure d'au moins une caractéristique physique pour un ensemble (21) pneumatique comportant un dispositif (9) de détection de la caractéristique physique, un dispositif (11) de transmission sans fil de valeurs représentatives des mesures obtenues par le dispositif (9) de détection, un dispositif (13) de passage antiretour de fluide permettant le gonflage de l'ensemble (21) pneumatique et une source (15) d'énergie électrique, **caractérisé en ce que** le système (1) de mesure comporte un corps (3) métallique électriquement conducteur fermé par un couvercle (5) en matériau transparent aux ondes du dispositif (11) de transmission sans fil permettant au corps (3) d'être utilisé comme réceptacle permettant le positionnement stable, la transmission d'énergie électrique et la protection mécanique des dispositifs (9, 11) du système (1) de mesure tout en permettant la transmission sans fil au travers du couvercle (5) de valeurs représentatives des mesures obtenues par le dispositif (9) de détection.

2. Système (1) selon la revendication précédente, dans lequel la caractéristique physique mesurée est une pression et/ou une température.

3. Système (1) selon l'une quelconque des revendications précédentes, dans lequel le dispositif (11) de transmission sans fil comporte un générateur d'ondes électromagnétiques alimenté par la source (15) d'énergie électrique et au moins une antenne (12) apte à émettre au travers du couvercle (5) les ondes électromagnétiques générées en dehors du système (1) de mesure.

4. Système (1) selon la revendication précédente, dans lequel au moins une partie de l'antenne (12) est entourée par le corps (3) et au moins une autre partie est entourée par le couvercle (5).

5. Système (1) selon la revendication précédente, dans lequel la partie de l'antenne (12) entourée par le corps (3) s'étend sur une hauteur (H₂) inférieure ou égale à 7 mm.

6. Système (1) selon l'une quelconque des revendications précédentes, dans lequel le corps (3) comporte un fond (4) avec un évidement afin de compenser les dilatations de la source (15) d'énergie électrique.

7. Système (1) selon la revendication précédente, dans lequel l'évidement forme un interstice au moins égal à 0,1 mm entre la source (15) d'énergie électrique et le corps (3).

8. Système (1) selon l'une quelconque des revendications précédentes, dans lequel le couvercle (5) comporte au moins un pilier (37) destiné à plaquer la source (15) d'énergie électrique contre le corps (3).

9. Ensemble (21) pneumatique comportant un bandage pneumatique ajusté sur une jante (23) et un système (1) de mesure de pression monté sur la jante (23) afin de surveiller au moins une caractéristique physique de l'ensemble (21) pneumatique, **caractérisé en ce que le système** (1) de mesure est selon l'une des revendications précédentes.

10. Ensemble (21) pneumatique selon la revendication précédente, dans lequel le système (1) de mesure comporte en outre un dispositif (17) de fixation du corps (3) dans un évidement (24) de la jante (23), le dispositif (17) de fixation étant monobloc avec le corps (3) et en prolongement du corps (3) afin de saillir de la jante (23) pour permettre sa solidarisation sur la jante (23) tout en autorisant le gonflage de l'ensemble (21) pneumatique par le système (1) de mesure.

11. Ensemble (21) pneumatique selon la revendication 9, dans lequel le système (1) de mesure comporte en outre un dispositif (17) de fixation du corps (3) dans un évidement (24) de la jante (23), la jante (23) étant solidarisée entre le corps (3) et un deuxième corps (33) à l'aide du dispositif (17) de fixation tout en autorisant le gonflage de l'ensemble (21) pneumatique par le système (1) de mesure.

## Patentansprüche

1. System (1) zur Messung wenigstens einer physikalischen Eigenschaft für eine Reifenanordnung (21), mit einer Vorrichtung (9) zur Detektion der physikalischen Eigenschaft, einer Vorrichtung (11) zur drahtlosen Übertragung von Werten, die für die durch die Detektionsvorrichtung (9) erhaltenen Messungen repräsentativ sind, einer den Rückfluss von Fluid verhindernde Durchgangsvorrichtung (13), die das Auffüllen der Reifenanordnung (21) gestattet, und einer elektrischen Energiequelle (15), **dadurch gekennzeichnet, dass** das Messsystem (1) einen metallischen Körper (3) aufweist, der elektrisch leitend ist und durch einen Deckel (5) aus einem für die Wellen der drahtlosen Übertragungsvorrichtung (11) transparenten Material verschlossen ist, der dem Körper (3) gestattet, als Behältnis verwendet zu werden, das die stabile Positionierung, die Übertragung von elektrischer Energie und den mechanischen Schutz der Vorrichtungen (9, 11) des Messsystems (1) gestattet und gleichzeitig die drahtlose Übertragung von Werten, die für die durch die Detektionsvorrichtung (9) erhaltenen Messungen repräsentativ sind, durch den Deckel (5) hindurch gestattet.

2. System (1) nach dem vorhergehenden Anspruch, wobei die gemessene physikalische Eigenschaft ein Druck und/oder eine Temperatur ist.

3. System (1) nach einem der vorhergehenden Ansprüche, wobei die Vorrichtung (11) zur drahtlosen Übertragung einen Generator von elektromagnetischen Wellen aufweist, der durch die elektrische Energiequelle (15) gespeist wird, und wenigstens eine Antenne (12) aufweist, die imstande ist, durch den Deckel (5) hindurch die erzeugten elektromagnetischen Wellen außerhalb des Messsystems (1) zu senden.

4. System (1) nach dem vorhergehenden Anspruch, wobei wenigstens ein Teil der Antenne (12) von dem Körper (3) umgeben ist und wenigstens ein anderer Teil von dem Deckel (5) umgeben ist.

5. System (1) nach dem vorhergehenden Anspruch, wobei sich der Teil der Antenne (12), der von dem Körper (3) umgeben ist, auf einer Höhe (H2) erstreckt, die kleiner oder gleich 7 mm beträgt.

6. System (1) nach einem der vorhergehenden Ansprüche, wobei der Körper (3) einen Boden (4) mit einer Ausnehmung aufweist, um die Ausdehnungen der elektrischen Energiequelle (15) zu kompensieren.

7. System (1) nach dem vorhergehenden Anspruch, wobei die Ausnehmung einen Zwischenraum wenigstens gleich 0,1 mm zwischen der elektrischen Energiequelle (15) und dem Körper (3) bildet.

8. System (1) nach einem der vorhergehenden Ansprüche, wobei der Deckel (5) wenigstens einen Pfeiler (37) aufweist, der dazu bestimmt ist, die elektrische Energiequelle (15) gegen den Körper (3) zu drücken.

9. Reifenanordnung (21), aufweisend einen Luftreifen, der auf eine Felge (23) aufgepasst ist, und ein System (1) zur Messung von Druck, das auf der Felge (23) montiert ist, um wenigstens eine physikalische Eigenschaft der Reifenanordnung (21) zu überwachen, **dadurch gekennzeichnet, dass** das Messsystem (1) nach einem der vorhergehenden Ansprüche ausgestaltet ist.

10. Reifenanordnung (21) nach dem vorhergehenden Anspruch, wobei das Messsystem (1) ferner eine Vorrichtung (17) zur Befestigung des Körpers (3) in einer Ausnehmung (24) der Felge (23) aufweist, wobei die Befestigungsvorrichtung (17) einstückig mit dem Körper (3) und in der Verlängerung des Körpers (3) ausgebildet ist, um von der Felge (23) vorzustehen, um ihre feste Verbindung auf der Felge (23) zu gestatten, und gleichzeitig das Auffüllen der Reifenanordnung (21) durch das Messsystem (1) erlaubt.

11. Reifenanordnung (21) nach Anspruch 9, wobei das Messsystem (1) ferner eine Vorrichtung (17) zur Befestigung des Körpers (3) in einer Ausnehmung (24) der Felge (23) aufweist, wobei die Felge (23) zwischen dem Körper (3) und einem zweiten Körpers (33) mit Hilfe der Befestigungsvorrichtung (17) fest verbunden ist und gleichzeitig das Auffüllen der Reifenanordnung (21) durch das Messsystem (1) erlaubt.

## Claims

1. System (1) for measuring at least one physical characteristic for a pneumatic assembly (21), comprising a device (9) for detecting the physical characteristic, a device (11) for wireless transmission of values representing the measurements obtained by the detection device (9), a one-way fluid passage device (13) for inflating the pneumatic assembly (21), and an electrical energy source (15), **characterized in that** the measuring system (1) comprises an electrically conductive metal body (3) closed by a cover (5) made of material transparent to the waves of the wireless transmission device (11), allowing the body (3) to be used as a receptacle which provides for stable positioning, the transmission of electrical energy, and the mechanical protection of the devices (9, 11) of the measuring system (1) while allowing wireless transmission through the cover (5) of values representing the measurements obtained by the detection device (9).

2. System (1) according to the preceding claim, wherein the measured physical characteristic is a pressure and/or a temperature.

3. System (1) according to any of the preceding claims, wherein the wireless transmission device (11) comprises an electromagnetic wave generator powered by the source (15) of electrical energy and at least one antenna (12) capable of emitting the generated electromagnetic waves outside the measuring system (1) through the cover (5).

4. System (1) according to the preceding claim, wherein at least one part of the antenna (12) is surrounded by the body (3) and at least one other part is surrounded by the cover (5).

5. System (1) according to the preceding claim, wherein the part of the antenna (12) surrounded by the body (3) extends over a height (H₂) of less than or equal to 7 mm.

6. System (1) according to any of the preceding claims, wherein the body (3) comprises a bottom (4) with a recess in order to compensate for the expansion of the electrical energy source (15).

7. System (1) according to the preceding claim, wherein the recess forms a gap of at least 0.1 mm between the electrical energy source (15) and the body (3).

8. System (1) according to any of the preceding claims, wherein the cover (5) comprises at least one pillar (37) intended to press the electrical energy source (15) against the body (3).

9. Pneumatic assembly (21), comprising a pneumatic tire fitted to a rim (23) and a pressure measuring system (1) mounted on the rim (23) in order to monitor at least one physical characteristic of the pneumatic assembly (21), **characterized in that** the measuring system (1) is according to any of the preceding claims.

10. Pneumatic assembly (21) according to the preceding claim, wherein the measuring system (1) further comprises a device (17) for fixing the body (3) in a recess (24) of the rim (23), the fixing device (17) being integral with the body (3) and being an extension of the body (3) such that it projects from the rim (23) to allow its rigid connection to the rim (23) while allowing the pneumatic assembly (21) to be inflated by means of the measuring system (1).

11. Pneumatic assembly (21) according to claim 9, wherein the measuring system (1) further comprises a device (17) for fixing the body (3) in a recess (24) of the rim (23), the rim (23) being rigidly connected between the body (3) and a second body (33) by means of the fixing device (17) while allowing the pneumatic assembly (21) to be inflated by means of the measuring system (1).
